# EUROPEAN PATENT SPECIFICATION

(11) **EP 2 607 132 B1**
(45) Date of publication and mention of the grant of the patent: **13.08.2014**
(21) Application number: 12198026.2
(22) Date of filing: 19.12.2012
(51) Int. Cl.: B60K 11/08

(54) **Air intake assembly**
Lufteinlassanordnung
Ensemble d'admission d'air

(30) Priority: 20.12.2011 GB 201121871
(43) Date of publication of application: 26.06.2013
(73) Proprietor: Nissan Motor Manufacturing (UK) Ltd., Cranfield Bedfordshire MK43 0DB (GB)
(72) Inventor: Kenion, Troy, Cranfield, MK43 ODB (GB); Le Good, Geoffrey Mark, Cheshire CW9 8WD (GB)

(56) References cited:
- EP-A2- 2 248 693
- JP-A- 58 105 850
- JP-A- 2001 018 736
- JP-A- 2008 049 735
- JP-U- H01 107 627

## Description

### Field of the invention

The present invention lies in the field of automotive technology and more specifically in the field of automotive engine cooling. In particular, embodiments of the invention relate to an air intake assembly for an air cooling system of an automotive engine.

### Background to the invention

In automotive vehicles it is necessary to ensure that the engine does not overheat. Such overheating could result in the engine being damaged or even destroyed.

One means for cooling a vehicle engine is by connecting a heat transfer device such as a radiator to the engine and providing a flow of air across the radiator. In such an arrangement, air flows into the vehicle through an air inlet at a front end of the vehicle when the vehicle is moving. The air then flows across the radiator and out of the vehicle through an air outlet. Heat produced by the engine is transferred to the air as the air passes across the radiator and the heated air is then transferred away from the vehicle. Such air cooling systems not only prevent malfunction of the engine, but also assist in controlling engine temperature for optimisation of vehicle efficiency.

In recent years it has become of greater importance for automotive manufacturers to reduce fuel consumption, both for environmental and economic reasons. One way to assist in reducing fuel consumption is by minimising the profile of the front end of a vehicle in order to improve the aerodynamic properties of the vehicle. However, minimising the profile of the front end of a vehicle generally reduces the area at the front end of the vehicle that is available for intake of air for cooling of the engine. Hence, in general when the size of the front end of a vehicle is reduced, so too is the air flow to the radiator, which can lead to cooling problems. In automotive vehicle design, fuel efficiency is often therefore compromised by engine cooling efficiency.

In vehicles having mid- and rear-mounted engines there are further problems associated with maintaining a stable flow of air through the front bay of the vehicle and across the radiator. In particular, the additional space in the front bay of such vehicles encourages turbulent and recycled air flow, and often creates stagnant air pockets. Such dead air recirculation becomes a real problem in the cooling system by reducing the amount of air flowing through the cooling system. This results in a compromised cooling performance.

Air intake assemblies are known in the art. For example, 01 JP H01 107627 U showing the features of the preamble of claim 1, and JP 008 049735 A (Mazda Motor), JP 58 105850 A (Nissan Motor), and JP 2001 018736 A (Honda Motor Go Ltd) show dual air intakes for cooling a radiator. EP 2 248 693 A2 (Aisin Seiki) shows a grille arrangement for blocking and permitting air flow into a radiator. However, none of these address the problems stated above for turbulent and recycled air flow in large front bay spaces.

There are therefore various problems associated with the efficiency of air cooling systems, which in turn reduces the overall efficiency of vehicles.

It is an aim of embodiments of the invention to at least partially mitigate some of the above-mentioned problems.

### Summary of the invention

According to a first aspect of the present invention, there is provided an air intake assembly for an air cooling system of an automotive vehicle having a radiator, comprising a first air inlet upstream of the radiator which defines a first air flow into the air cooling system, in use; and a second air inlet upstream of the radiator which defines a second air flow into the air cooling system, in use. The second air inlet has at least one dimension that is smaller than the equivalent dimension of the first air inlet so that the second air flow has a higher velocity than the first air flow; thereby to converge the first and second air flows downstream of the first and second air inlets into a single flow through the radiator. The air intake assembly further comprises an air flow directing member arranged, in use, between the first and second inlets so as to converge the first and second air flows into a laminar air flow downstream of the air flow directing member.

The invention provides the advantage that when the upper and lower air flows meet, the high velocity of the lower air flow helps to urge the upper air flow up towards the radiator. Furthermore the higher velocity of the lower air flow, compared to the velocity of the upper air flow, draws in the upper air flow due to the differential pressures. The upper air flow therefore converges with the lower air flow to provide a laminar flow and minimise any turbulence caused by the two separate air flows converging.

In particular, an advantage is obtained by providing an air flow directing member between the first and second air inlets. The air flow directing member preferably has an aerofoil-like cross section and helps to reduce turbulence between the first and second air flows when they converge.

The air intake assembly is intended for use in, but is not limited to, a high performance aerodynamic vehicle, such as an electric hybrid vehicle, where it is particularly important to be able to provide an effective air cooling system.

In a preferred embodiment, the at least one dimension of the second air inlet is vertical height.

Preferably, the cross sectional flow area through the second inlet is less than the cross sectional flow area through the first air inlet.

The first air inlet may, in a preferred embodiment, be positioned above the second air inlet.

The first air inlet is arranged to be covered by a front grill of the vehicle which defines a plurality of inlet paths into the first air inlet. In other words, the first air inlet does not itself form a part of the main entry grill into the engine.

The air flow directing member preferably has an outer surface for directing the air flow, the outer surface having upper and lower portions arranged so that a distance provided along the upper portion is greater than a distance provided along the lower portion flow. This has the effect of increasing the velocity of air flowing over the upper portion relative to the velocity of air flowing over the lower portion.

In one embodiment, the upper portion defines an upper surface of the air flow directing member and the lower portion defines a lower surface of the air flow directing member, and the upper surface slopes downwardly towards the lower surface from an upstream end of the air flow directing member to a downstream end of the air flow directing member.

For example, the lower surface of the air flow directing member may slope upwardly towards the upper surface of the air flow directing member from an upstream end of the air flow directing member to a downstream end of the air flow directing member.

The slope of the upper surface may, for example, have an increased gradient relative to the slope of the lower surface.

A benefit of the aforementioned arrangement is that it allows for the lower air flow to maintain a relatively linear flow path, while the upper air flow is channelled into alignment with the lower air flow. Consequently, as the upper and lower air flows converge they remain relatively undisturbed by one another.

The upper portion of the air flow directing member may include a rear surface of the air flow directing member which slopes downwardly between the upper surface and the lower surface.

In use, the air flow directing member may be arranged to be positioned behind a rear surface of a bumper of the vehicle and to extend downstream from the bumper.

Alternatively, the air flow directing member may form an integral part of the vehicle bumper.

The second air inlet may be defined between the air flow directing member and a body part of the vehicle.

Preferably, for example, the body part is a front splitter having a profile arranged to reduce lift to an underside of the vehicle.

An upper surface of the splitter may include a portion that is inclined upwardly from an upstream end to a downstream end thereof to provide an aerodynamic profile.

Preferably, the first air inlet is arranged to be defined between the air flow directing member and a bonnet of the vehicle.

It will be appreciated that preferred and/or optional features of the first aspect of the invention may be incorporated alone or in appropriate combination in the second aspect of the invention also.

### Brief description of the drawings

Embodiments of the present invention will now be described, by way of example only, with reference to the accompanying drawings, in which like reference numerals are used for like parts, and in which:
Figure 1 is a cross-sectional view of an air cooling system in a front end of a vehicle in accordance with an embodiment of the invention;
Figure 2 is a perspective view of the front end of the vehicle of Figure 1;
Figure 3 is a perspective view of the front end of the vehicle of Figure 1 with a front grill of the vehicle removed;
Figure 4 is a cross-sectional view of the front end 10 of the vehicle of Figure 1, to show the flow of air through the air cooling system;
Figure 5 is a plan view of an air flow directing member of the air cooling system of Figure 1;
Figure 6 is a perspective view of the air flow directing member of Figure 5;
Figure 7 is a cross-sectional view of the air flow directing member of Figures 5 and 6 along the line X-X shown in Figure 5;
Figure 8 is a perspective view of a splitter of the air cooling system of Figure 1;
Figure 9 is a plan view of the splitter of Figure 8;
Figure 10 is a side view of the splitter of Figures 8 and 9;
Figure 11 is a cross sectional view of the splitter of Figures 8, 9 and 10 along the line XI-XI shown in Figure 9;
Figure 12 is a perspective view of internal components of the front end of the vehicle of Figure 1, including air flow ducts; and
Figure 13 is a perspective view of the air flow ducts of Figure 12.

### Detailed description of embodiments of the invention

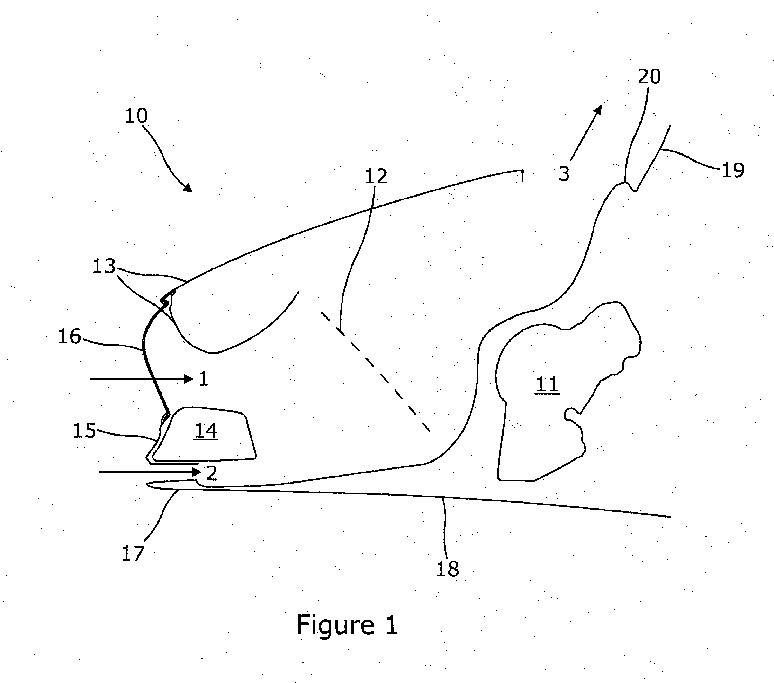

A vehicle air cooling system in accordance with a first embodiment of the invention will now be described with reference to Figures 1 to 4.

A front end 10 of a vehicle includes a heating, ventilation and air conditioning system (HVAC) 11 of the engine, along with a heat transfer device in the form of a radiator 12. Heat produced by the vehicle's engine is transferred to the radiator 12, which is positioned in an air cooling path between first and second air inlets 1, 2, which form main and secondary air inlets respectively, and an air outlet 3. The main air inlet 1 is positioned above the secondary air inlet 2, and therefore these air inlets shall hereinafter be referred to as the upper air inlet 1 and lower air inlet 2 respectively. The air outlet 3 is located between an upper end of the bonnet 13 situated near the vehicle windscreen 19 and a chassis 20 of the vehicle that supports the windscreen 19.

The forward movement of the vehicle drives a flow of air through the air cooling system. The air that passes through the inlets 1, 2 passes through and over the radiator 12 and leaves the air cooling system through the outlet 3, as indicated by the arrow proximate to the outlet 3 in Figure 1. As air passes over the radiator 12, the air is heated and the heated air leaves the vehicle through the outlet 3. The air cooling system thereby transfers heat away from the radiator 12, and therefore away from the engine.

When the vehicle is moving forwards, air enters the air cooling system through the inlets 1, 2, as indicated by the arrows proximate to the inlets 1, 2 in Figure 1. The upper air inlet 1 is located so that the passage of airflow therethrough is horizontally in line with, and impacts with, the HVAC 11. The air flow path extends upwards from the upper and lower air inlets 1, 2, which is at a bottom, forwardmost portion of the vehicle, towards the air outlet 3. The radiator 12 is arranged within the air flow path, sloping forwards with its upper end in a forward position relative to its lower end and such that a top end of the radiator 12 is located slightly higher in the front end 10 of the vehicle than the upper air inlet 1.

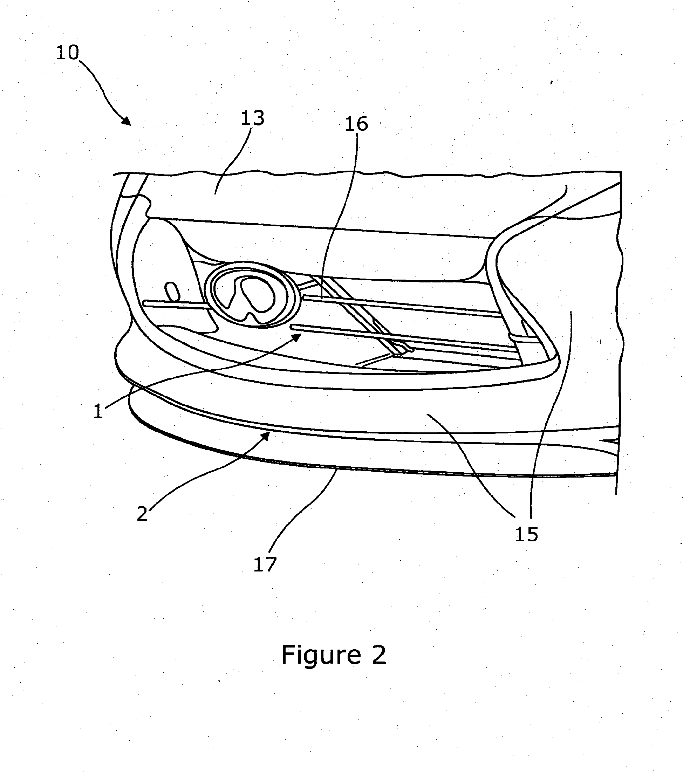

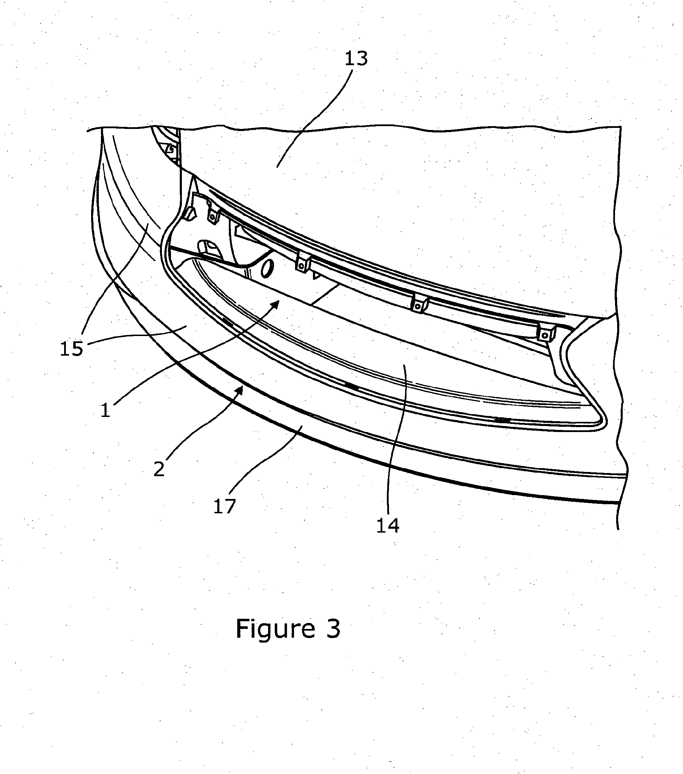

As shown in Figures 2 and 3, the first and second air inlets 1, 2 are elongate openings that extend laterally across a portion of the front of the vehicle with the upper air inlet 1 presenting a larger cross sectional area to the flow than the lower air inlet 2. In particular, the upper air inlet 1 is of increased height compared with the equivalent dimension of the lower air inlet 2, with the lower air inlet 2 taking the form of a relatively thin horizontal slit. The relative dimensions of the upper and lower air inlets 1, 2 are such that the air flow through the lower air inlet 2 (referred to as the lower air flow) has a higher velocity than the air flow through the upper air inlet 1 (referred to as the upper air flow). As such, when the upper and lower air flows meet within the air flow path, the high velocity of the lower air flow helps to urge the upper air flow up towards the radiator 12 as discussed above. Furthermore the higher velocity of the lower air flow, compared to the velocity of the upper air flow, draws in the upper air flow due to the differential pressures. The upper air flow therefore becomes a parallel flow with the lower air flow to provide a laminar flow and minimise turbulence caused by the two separate air flows converging.

As the higher velocity of the lower air flow helps to "sweep up" the upper air flow towards and through the radiator 12, the presence of the lower air flow therefore prevents the upper air flow from being directed straight towards the engine, which would result in large amounts of turbulence. Furthermore, the presence of a higher velocity air flow below the main upper air flow results in a substantially laminar air flow through the air cooling system, which also helps to reduce turbulence and dead air flow within the cooling system. In addition, by improving the air flow through the cooling system, the heat transfer from the radiator 12 to the air flowing through the air cooling system and out of the vehicle is also improved. Consequently, in accordance with this embodiment of the invention, it is possible to reduce the size of the front end profile of the vehicle to improve aesthetics and aerodynamics, while also providing a sufficient air flow through the air cooling system for cooling the engine. The structure and positioning of the air inlets 1, 2 therefore improve the cooling efficiency of the vehicle.

In more detail, the upper air inlet 1 is defined by a lower surface of an upper body portion 13 of the front end of the vehicle (such as the vehicle bonnet), and an upper surface of an air flow directing member 14, which is formed within the rear of the vehicle bumper 15. As best depicted in Figures 2 and 3, the bumper 15 extends along a lower edge of the upper air inlet 1 and also extends upwards at the lateral ends of the upper air inlet 1 to define the sides of the upper air inlet 1. A front grill 16 covers the upper air inlet 1 to prevent debris entering the air cooling system, and also to provide an aesthetically appealing appearance to the front of the vehicle. It will be appreciated that the front grill 16 itself provides a plurality of different inlets into the air cooling system, but these inlets are upstream of and distinct from the upper air inlet 1.

An upper side of the lower air inlet 2 is defined by a lower surface of the air flow directing member 14, and a lower side of the lower air inlet 2 is defined by an upper surface of a splitter member, or splitter 17, which is connected to a front under-tray 18 of the vehicle.

In alternative embodiments of the invention (not shown) the bumper 15 may define a lower surface of the upper air inlet 1 and an upper surface of the lower air inlet 2, and the air flow directing member 14 may extend downstream from the bumper.

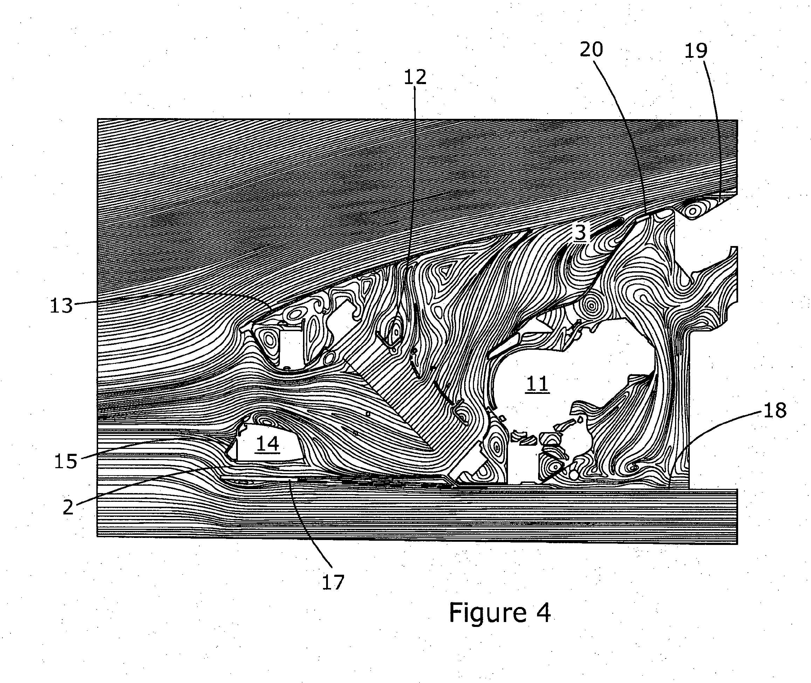

Figure 4 shows the flow of air through the front end 10 of the vehicle. It can be seen how there is a relatively laminar flow, particularly between the inlets 1, 2 and the radiator 12. Furthermore, the drawing in of the upper air flow, when the upper and lower air flows converge, can be seen in Figure 4.

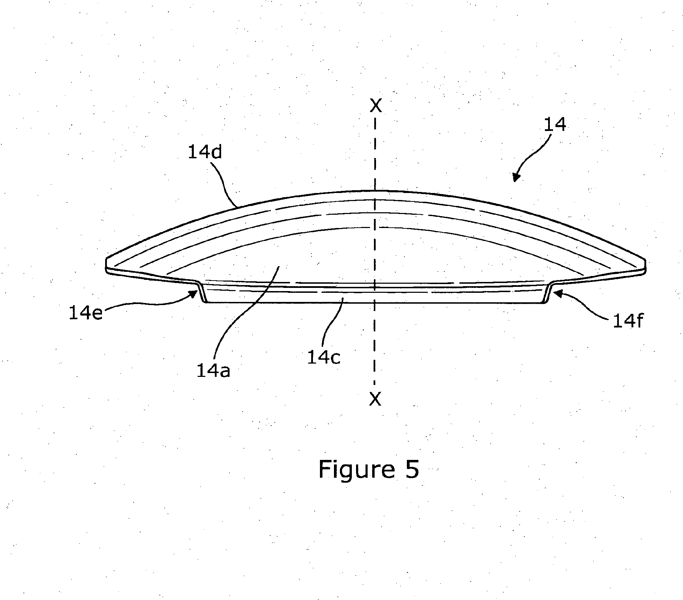

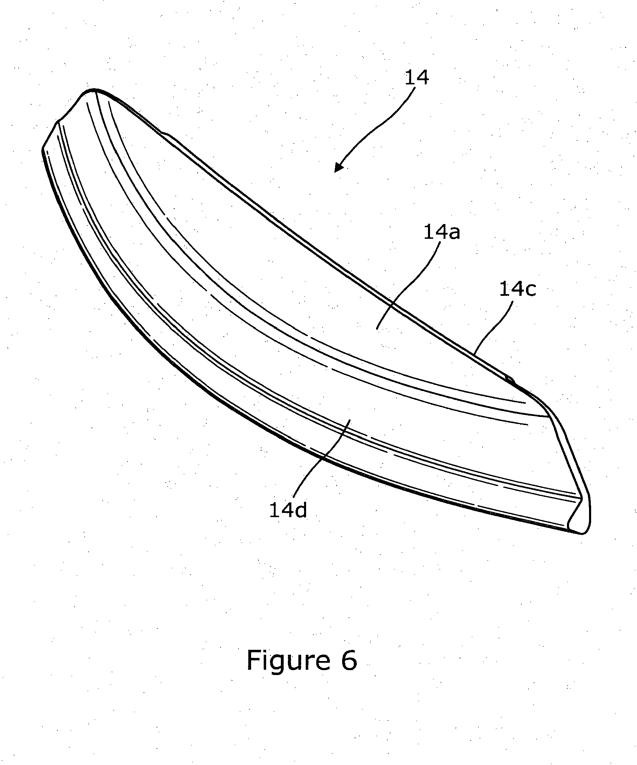

The shape and configuration of the air flow directing member 14, in addition to the splitter 17, help to improve the flow of air through the air cooling system. These features shall now be discussed in more detail with reference to Figures 5 to 11.

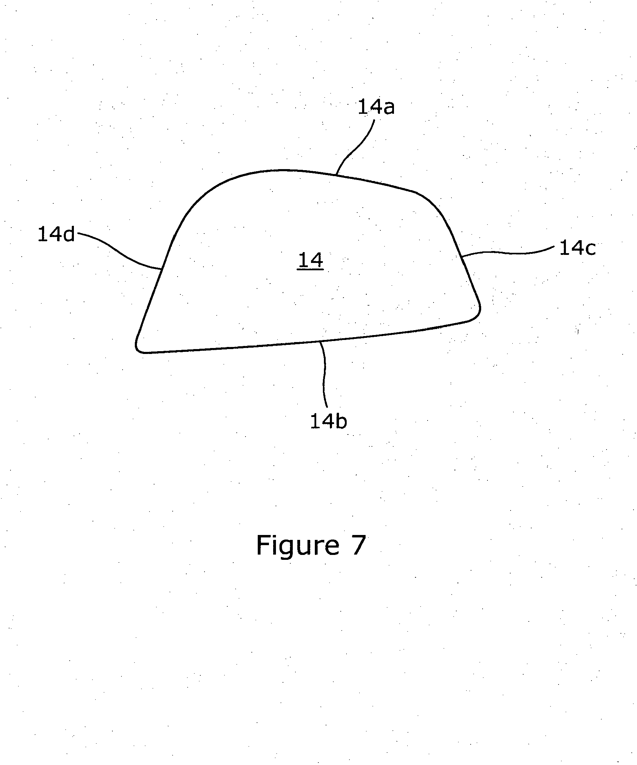

The air flow directing member 14 is shown in further detail in Figures 5 to 7. In this embodiment of the invention the air flow directing member 14 is a foam-moulded arrangement that has a front surface having a profile arranged to match a profile of the rear surface of the moulded bumper 15 to allow the parts 14, 15 to be mated together. Hence, the air flow directing member 14 has a curved front surface 14d, which slopes downwards and forwards from its uppermost to its lowermost part, as seen most clearly in Figure 7. The bumper is made from injection-moulded plastic and effectively provides a skin over the air flow directing member 14. The shape of the bumper 15 is selected primarily for aesthetics, but its characteristics are also selected for aerodynamic and safety reasons.

The air flow directing member 14 extends rearward from the bumper 15 and has an outer surface comprising an upper portion, defining an upper surface 14a and a rear surface 14c of the member 14, and lower portion defining a lower surface 14b of the member 14. The air flow directing member 14 has an aerofoil-like cross-section when viewed from the side and, in particular, tapers from its front to its rear so that the upper and lower surfaces 14a, 14b become closer together towards the rear of the body. This tapering aids the convergence of the upper and lower air flows to thereby reduce turbulence that could arise when the upper and lower air flows meet. The upper surface 14a slopes downwardly at a steeper angle, relative to horizontal, than the angle at which the lower surface 14b slopes upwardly. This arrangement allows for the lower air flow to maintain a relatively linear flow path, while the upper air flow is channelled into alignment with the lower air flow. Consequently, the upper and lower air flows remain relatively undisturbed by one another when they converge.

The rear surface 14c of the air flow directing member 14 slopes downwardly, at a relatively steep angle, from the upper surface 14a towards the lower surface 14b to provide a rear protrusion of the member 14. The shaping of the air flow directing member 14 at the rear protrusion assists in keeping the lower air flow substantially linear and allows the upper air flow to be directed gently so as to be substantially parallel with the lower air flow. In this way a combined laminar air flow is created.

The combined length of the upper and rear surfaces 14a, 14c is increased compared with the length of the lower surface 14b. This helps to increase the speed of the air flowing over the upper surface of the air flow directing member 14. Consequently, a lower portion of the upper air flow will flow at a higher velocity than an upper portion of the upper air flow. When the upper and lower air flows come together, the increased velocity of the lower portion of the upper air flow helps to improve convergence of the upper and lower air flows, as the lower air flow also has a relatively high velocity. Turbulence is therefore reduced as the upper and lower air flows come together to provide a laminar air flow.

The air flow directing member 14 extends across the full width of the bumper 15. However, the air flow directing member 14 narrows towards its rear so that the rear surface 14c only extends across a central portion of the air flow directing member 14. This is because it is only this portion 14c of the air flow directing member 14 that extends into the flow path through the air cooling system. In particular, side edges 14e, 14f of the rear protrusion, which are defined by the rear surface 14c of the air flow directing member, are arranged to engage with the internal sides of the lower duct 21.

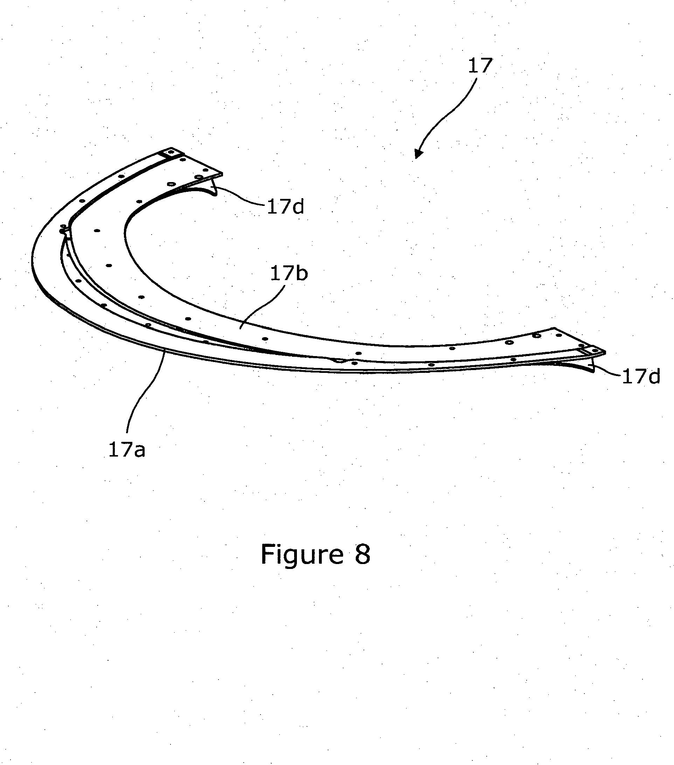

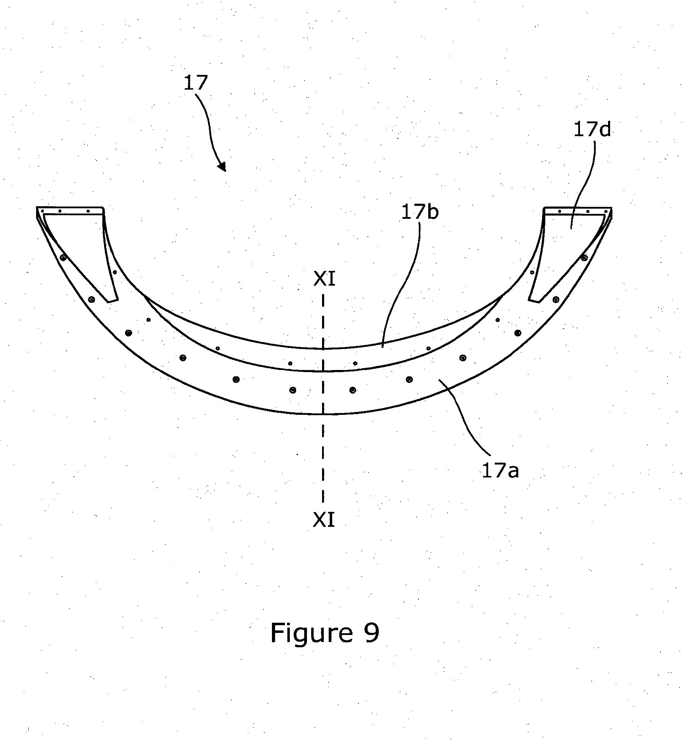

The splitter 17 of the air cooling system is shown in detail in Figures 8 to 11. As seen in Figures 8 and 9, the splitter 17 defines the lower surface of the lower air inlet 1 and is arc-shaped to substantially match the front profile of the vehicle. The splitter 17 has an upper surface with two distinct portions; a front aerodynamic portion 17a and a connection portion 17b which connects with the front tray 18 of the vehicle. The splitter 17 has a lower surface 17c that is substantially flat with a slight downwards slope towards the front end of the splitter 17.

The aerodynamic portion 17a of the splitter 17 is substantially flat apart from a slight downward slope from its rearmost, downstream part towards its frontmost, upstream part. Due to this shaping, the aerodynamic portion 17a of the splitter 17 therefore tapers downwardly towards its upstream end.

This shaping of the splitter 17 provides desirable aerodynamic properties. In particular, a smooth flow of air into the air cooling system is provided and a downward biasing force is applied to the vehicle due to a higher pressure acting on the upper surface of the splitter 17 compared with that acting on the lower surface 17c of the splitter 17.

The inner portion 17b of the splitter is arc-shaped shaped and steps down from the aerodynamic portion 17a, from a higher front portion to a lower rear portion. The stepped nature of the inner portion 17b means that the splitter 17 is thinner in this inner region 17b than it is in the aerodynamic portion 17a.

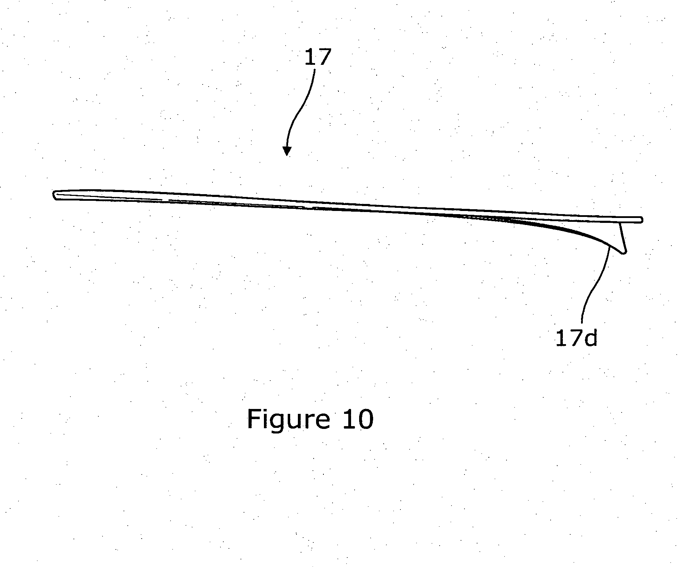

On the lower surface 17c of the splitter 17, towards the rear, a plurality of fins 17d are provided, as best depicted in Figure 10. These fins 17d act as "wheel spoilers" to direct air away from the wheels.

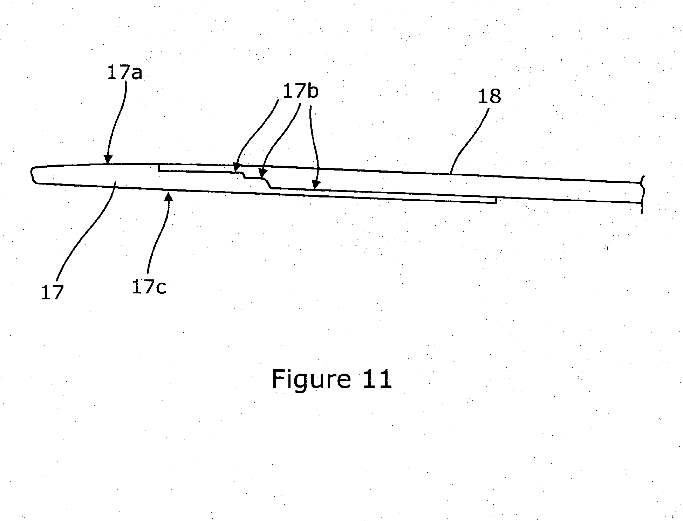

One fin 17d is provided at each end of the arc-shaped splitter 17. Each of the fins 17d tapers downwardly, from the front towards the rear, from the base of the splitter 17 so that the height of each of the fins 17d increases towards the rear of the splitter 17, as seen in Figure 9. Viewed from the side, as in Figure 10, the rear face of each fin 17d has a slight downward slope from the top to the bottom of the fin 17d. Figure 11 shows how the splitter is engaged with the front tray 18.

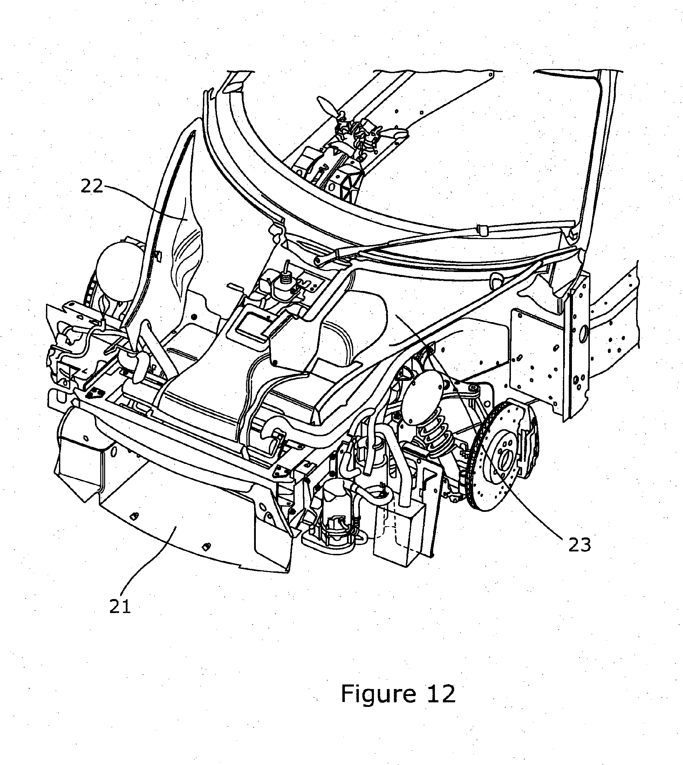

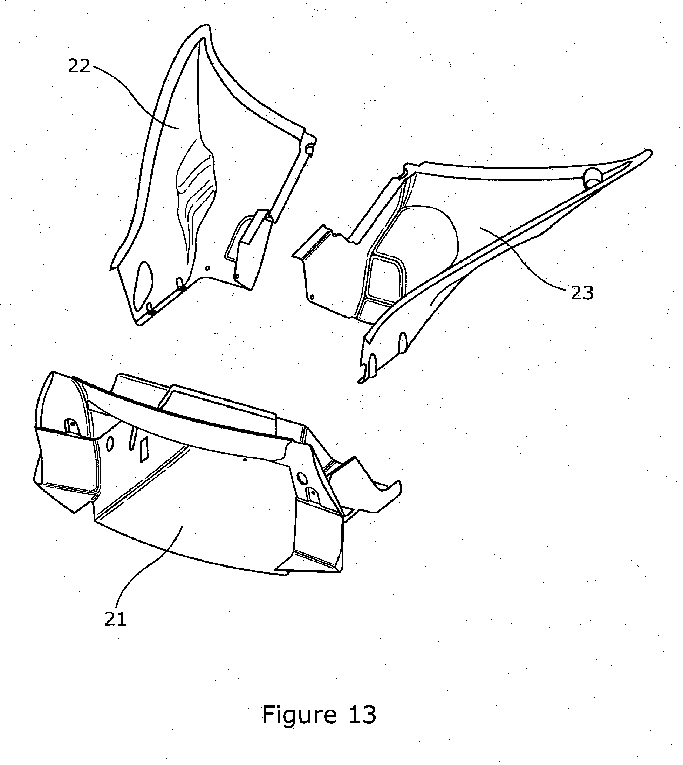

Figures 12 and 13 show the position of three air-directing ducts 21, 22, 23 within the air cooling system, which are provided to further improve the flow of air therethrough. In particular, a lower duct 21 is provided between the air inlets 1, 2 (not identified in Figures 12 and 13), upstream of the radiator 12, and left and right upper ducts 22, 23 are provided downstream of the radiator 12 and the outlet 3. These ducts 21, 22, 23 help to define a smooth air flow path through the air cooling system, and thereby assist in reducing turbulence.

The lower duct 21 is shaped to direct the air flow from the inlets 1, 2 upwards towards the radiator 12. In particular, the lower duct 21 has a sloped rear portion to direct air up towards the radiator 12.

The left and right upper ducts 22, 23 are arranged to direct air upwards from the radiator 12 towards the air outlet 3. As shown in Figure 12, each of the upper ducts 22, 23 comprises a lower surface and two side surfaces, each of the lower surfaces being upwardly sloped from its front to its rear to direct the flow of air. Each duct is closed on its upper side by the bonnet of the vehicle (not shown in Figure 12).

In this embodiment of the invention the two upper ducts 22, 23 direct the air towards a single air outlet 3. However, it will be appreciated that in alternative embodiments each duct could direct the air flow to a different outlet associated only with that particular duct. In other embodiments, any number of outlets could be provided.

The embodiments of the invention discussed above relate to an air inlet arrangement comprising upper and lower air inlets 1, 2, wherein the lower air inlet 2 results in a higher velocity airflow therethrough compared with the upper air inlet 1. As discussed above, the effect of this is that the higher velocity lower air flow "sweeps up" the upper air flow to give a combined flow through the radiator 12. This arrangement is particularly useful for vehicles having a main air inlet 1 at a relatively low position at the front of the vehicle.

In alternative embodiments of the invention it may be preferable to provide the higher velocity air flow at different positions with respect to the main air flow. For example, the external design of a vehicle could provide two main air inlets at each side of the front of the vehicle, while the engine is located in the middle of the front of the vehicle. In such an arrangement it would be beneficial to generate high velocity airflows at the outer sides of each of the main air inlets in order to direct the air flow through the main inlets towards the central engine. Furthermore, in vehicles having mid- or rear- mounted engines, air inlets may be provided at side portions of the vehicle. Consequently, it may again be advantageous to be able to direct the air flow from the sides of the vehicle towards an engine mounted centrally within the mid or rear of the vehicle.

In alternative embodiments a high velocity air flow, or a plurality of high velocity air flows, can be provided around the main inlet. Hence, more generally, it is envisaged that at least one directional air flow is provided adjacent to the main air flow in order to direct the main air flow along a desired air flow path.

It will be appreciated that reference to the position of parts or components of the assembly with respect to the orientation of the vehicle, such as front, rear, upwards and downwards, refer to a vehicle orientated for normal forwards/rearwards translatory movement.

Furthermore, reference to parts or components being upstream or downstream refers to the flow of air when the vehicle is moving in the normal forwards direction. It will also be appreciated that the terms upstream and front are generally interchangeable, as are the terms downstream and rear.

While reference is made generally to a vehicle, and many components corresponding to a car are depicted and described, it should be appreciated that the above-described embodiments of the invention are applicable for use with any suitable vehicle and not necessarily a car.

The above embodiments of the description are provided as examples of the invention only, and the invention is in no way limited to the above-described embodiments. Other alternative embodiments of the invention are envisaged. The scope of the invention is only limited by the appended claims.

## Claims

1. An air intake assembly for an air cooling system of an automotive vehicle having a radiator (12), the air intake assembly comprising:
a first air inlet (1) upstream of the radiator which defines a first air flow into the air cooling system, in use; and
a second air inlet (2) upstream of the radiator which defines a second air flow into the air cooling system, in use;
wherein the second air inlet (2) has at least one dimension that is smaller than the equivalent dimension of the first air inlet (1) so that the second air flow has a higher velocity than the first air flow; thereby to converge the first and second air flows downstream of the first and second air inlets into a single flow through the radiator
**characterised in that**:
the air intake assembly further comprises an air flow directing member (14) arranged, in use, between the first and second inlets (1, 2) so as to converge the first and second air flows into a laminar air flow downstream of the air flow directing member (14).

2. The air intake assembly according to claim 1, wherein the at least one dimension is vertical height.

3. The air intake assembly according to claim 1 or claim 2, wherein the cross sectional flow area through the second inlet (2) is less than the cross sectional flow area through the first air inlet (1).

4. The air intake assembly according to any preceding claim, wherein the first air inlet (1) is positioned above the second air inlet (2).

5. The air intake assembly according to any preceding claim, wherein the first air inlet (1) is arranged to be covered by a front grill of the vehicle which defines a plurality of inlet paths into the first air inlet (1).

6. The air intake assembly according to claim 5, wherein the air flow directing member (14) comprises an outer surface (14a, 14b, 14c, 14d) for directing the air flow, the outer surface having upper and lower portions arranged so that a distance provided along the upper portion is greater than a distance provided along the lower portion flow so as to increase the velocity of air flowing over the upper portion relative to the velocity of air flowing over the lower portion.

7. The air intake assembly according to claim 6, wherein the upper portion defines an upper surface (14a) of the air flow directing member and the lower portion defines a lower surface (14b) of the air flow directing member, and the upper surface (14a) slopes downwardly towards the lower surface (14b) from an upstream end of the air flow directing member to a downstream end of the air flow directing member (14).

8. The air intake assembly according to claim 6 or claim 7, wherein the lower surface (14b) of the air flow directing member slopes upwardly towards the upper surface (14a) of the air flow directing member from an upstream end of the air flow directing member (14) to a downstream end of the air flow directing member.

9. The air intake assembly according to claim 8, wherein the slope of the upper surface (14a) has an increased gradient relative to the slope of the lower surface (14b).

10. The air intake assembly according to any one of claims 7 to 9, wherein the upper portion of the air flow directing member includes a rear surface (14c) of the air flow directing member which slopes downwardly between the upper surface (14a) and the lower surface (14b).

11. The air intake assembly according to any one of claims 6 to 10, wherein, in use, the air flow directing member (14) is arranged to be positioned behind a rear surface of a bumper (15) of the vehicle and to extend downstream from the bumper.

12. The air intake assembly according to any one of claims 6 to 11, wherein the air flow directing member (14) is an integral part of the vehicle bumper (15).

13. The air intake assembly according to any one of claims 6 to 12, wherein the second air inlet (2) is defined between the air flow directing member (14) and a body part of the vehicle.

14. The air intake assembly according to claim 13, wherein the body part is a front splitter (17) having a profile arranged to reduce lift to an underside of the vehicle.

15. The air intake assembly according to claim 14, wherein an upper surface (17a, 17b) of the splitter (17) includes a portion that is inclined upwardlyfrom an upstream end to a downstream end thereof to provide an aerodynamic profile.

16. The air intake assembly according to any one of claims 5 to 15, wherein the first air inlet is arranged to be defined between the air flow directing member (14) and a bonnet of the vehicle.

17. An air cooling assembly for an engine of an automotive vehicle, comprising:
the air intake assembly of any one of claims 1 to 16 arranged to be positioned upstream of the engine;
an outlet (3) arranged to be positioned downstream of the engine; and
at least one duct (21, 22, 23) defining a flow path between the inlets of the air intake assembly and the outlet (3).

18. A vehicle, comprising:
the air cooling assembly according to claim 17; and
an engine positioned between the air intake assembly and the outlet (3).

## Patentansprüche

1. Luftansauganordnung für ein Luftkühlsystem eines Kraftfahrzeugs mit einem Radiator (12), wobei die Luftansauganordnung Folgendes umfasst:
einen ersten Lufteinlass (1) stromaufwärts von dem Radiator, der im Gebrauch einen ersten Luftstrom in das Luftkühlsystem definiert; und
einen zweiten Lufteinlass (2) stromaufwärts von dem Radiator, der im Gebrauch einen zweiten Luftstrom in das Luftkühlsystem definiert; und
wobei der zweite Lufteinlass (2) mindestens eine Abmessung aufweist, die kleiner ist als die entsprechende Abmessung des ersten Lufteinlasses (1), so dass der zweite Luftstrom eine höhere Geschwindigkeit aufweist als der erste Luftstrom; um dadurch den ersten und den zweiten Luftstrom stromabwärts von dem ersten und dem zweiten Lufteinlass zu einem einzigen Strom durch den Radiator zusammenzuführen,
**dadurch gekennzeichnet, dass**:
die Luftansauganordnung weiter ein Luftstrom-Lenkungselement (14) umfasst, das im Gebrauch zwischen dem ersten und dem zweiten Einlass (1, 2) angeordnet ist, um den ersten und den zweiten Luftstrom in einen laminaren Luftstrom stromabwärts von dem Luftstrom-Lenkungselement (14) zusammenzuführen.

2. Luftansauganordnung nach Anspruch 1, wobei es sich bei der mindestens einen Abmessung um die vertikale Höhe handelt.

3. Luftansauganordnung nach Anspruch 1 oder Anspruch 2, wobei die Strömungsquerschnittsfläche durch den zweiten Einlass (2) geringer ist als die Strömungsquerschnittsfläche durch den ersten Lufteinlass (1).

4. Luftansauganordnung nach einem der vorangehenden Ansprüche, wobei der erste Lufteinlass (1) über dem zweiten Lufteinlass (2) positioniert ist.

5. Luftansauganordnung nach einem der vorangehenden Ansprüche, wobei der erste Lufteinlass (1) dazu angeordnet ist, von einem vorderen Grill des Fahrzeugs bedeckt zu sein, der mehrere Einlasspfade in den ersten Lufteinlass (1) definiert.

6. Lufteinlassanordnung nach Anspruch 5, wobei das Luftstrom-Lenkungselement (14) eine äußere Oberfläche (14a, 14b, 14c, 14d) zum Lenken des Luftstroms umfasst, wobei die äußere Oberfläche einen oberen und einen unteren Abschnitt aufweist, die derart angeordnet sind, dass eine entlang dem oberen Abschnitt vorgesehene Strecke größer ist als eine entlang dem unteren Abschnittstrom vorgesehene Strecke, um die Geschwindigkeit von über den oberen Abschnitt strömender Luft relativ zu der Geschwindigkeit von über den unteren Abschnitt strömender Luft zu erhöhen.

7. Luftansauganordnung nach Anspruch 6, wobei der obere Abschnitt eine obere Oberfläche (14a) des Luftstrom-Lenkungselements definiert und der untere Abschnitt eine untere Oberfläche (14b) des Luftstrom-Lenkungselements definiert und die obere Oberfläche (14a) von einem stromaufwärtigen Ende des Luftstrom-Lenkungselements zu einem stromabwärtigen Ende des Luftstrom-Lenkungselements (14) zur unteren Oberfläche (14b) hin nach unten geneigt ist.

8. Luftansauganordnung nach Anspruch 6 oder Anspruch 7, wobei die untere Oberfläche (14b) des Luftstrom-Lenkungselements von einem stromaufwärtigen Ende des Luftstrom-Lenkungselements (14) zu einem stromabwärtigen Ende des Luftstrom-Lenkungselements (14) zur oberen Oberfläche (14a) des Luftstrom-Lenkungselements hin nach oben geneigt ist.

9. Luftansauganordnung nach Anspruch 8, wobei die Neigung der oberen Oberfläche (14a) relativ zu der Neigung der unteren Oberfläche (14b) einen erhöhten Gradienten aufweist.

10. Luftansauganordnung nach einem der Ansprüche 7 bis 9, wobei der obere Abschnitt des Luftstrom-Lenkungselements eine hintere Oberfläche (14c) des Luftstrom-Lenkungselements umfasst, die zwischen der oberen Oberfläche (14a) und der unteren Oberfläche (14b) nach unten geneigt ist.

11. Luftansauganordnung nach einem der Ansprüche 6 bis 10, wobei im Gebrauch das Luftstrom-Lenkungselement (14) dazu angeordnet ist, hinter einer hinteren Oberfläche des Stoßfängers (15) des Fahrzeugs positioniert zu sein und sich von dem Stoßfänger stromabwärts zu erstrecken.

12. Luftansauganordnung nach einem der Ansprüche 6 bis 11, wobei es sich bei dem Luftstrom-Lenkungselement (14) um einen integralen Bestandteil des Fahrzeugstoßfängers (15) handelt.

13. Luftansauganordnung nach einem der Ansprüche 6 bis 12, wobei der zweite Lufteinlass (2) zwischen dem Luftstrom-Lenkungselement (14) und einem Karosserieteil des Fahrzeugs definiert ist.

14. Luftansauganordnung nach Anspruch 13, wobei es sich bei dem Karosserieteil um einen vorderen Teiler (17) handelt, der ein Profil aufweist, das dazu angeordnet ist, Auftrieb auf eine Unterseite des Fahrzeugs zu verringern.

15. Luftansauganordnung nach Anspruch 14, wobei eine obere Oberfläche (17a, 17b) des Teilers (17) einen Abschnitt umfasst, der von einem stromaufwärtigen Ende zu einem stromabwärtigen Ende davon nach oben geneigt ist, um ein aerodynamisches Profil vorzusehen.

16. Luftansauganordnung nach einem der Ansprüche 5 bis 15, wobei der erste Lufteinlass dazu angeordnet ist, zwischen dem Luftstrom-Lenkungselement (14) und einer Motorhaube des Fahrzeugs definiert zu sein.

17. Luftkühlungsanordnung für einen Motor eines Kraftfahrzeugs, die Folgendes umfasst:
die Luftansauganordnung nach einem der Ansprüche 1 bis 16, die dazu angeordnet ist, stromaufwärts von dem Motor angeordnet zu sein;
einen Auslass (3), der dazu angeordnet ist, stromabwärts von dem Motor angeordnet zu sein; und
mindestens einen Kanal (21, 22, 23), der einen Strömungspfad zwischen den Einlässen der Luftansauganordnung und dem Auslass (3) definiert.

18. Fahrzeug, das Folgendes umfasst:
die Luftkühlungsanordnung nach Anspruch 17; und
einen Motor, der zwischen der Luftansauganordnung und dem Auslass (3) positioniert ist.

## Revendications

1. Ensemble d'admission d'air pour un système de refroidissement d'air d'un véhicule automobile ayant un radiateur (12), l'ensemble d'admission d'air comprenant :
une première entrée d'air (1) en amont du radiateur qui définit un premier écoulement d'air dans le système de refroidissement d'air, en utilisation ; et
une seconde entrée d'air (2) en amont du radiateur qui définit un second écoulement d'air dans le système de refroidissement d'air, en utilisation ; et
dans lequel la seconde entrée d'air (2) a au moins une dimension qui est plus petite que la dimension équivalente de la première entrée d'air (1) de sorte que le second écoulement d'air ait une vitesse plus élevée que le premier écoulement d'air ; afin de faire converger ainsi les premier et second écoulements d'air en aval des première et seconde entrées d'air en un seul écoulement à travers le radiateur,
**caractérisé en ce que** :
l'ensemble d'admission d'air comprend en outre un élément directeur d'écoulement d'air (14) agencé, en utilisation, entre les première et seconde entrées (1, 2) de façon à faire converger les premier et second écoulements d'air en un écoulement d'air laminaire en aval de l'élément directeur d'écoulement d'air (14).

2. Ensemble d'admission d'air selon la revendication 1, dans lequel la au moins une dimension est une hauteur verticale.

3. Ensemble d'admission d'air selon la revendication 1 ou la revendication 2, dans lequel l'aire d'écoulement en coupe à travers la seconde entrée (2) est inférieure à l'aire d'écoulement en coupe à travers la première entrée d'air (1).

4. Ensemble d'admission d'air selon l'une quelconque des revendications précédentes, dans lequel la première entrée d'air (1) est positionnée au-dessus de la seconde entrée d'air (2).

5. Ensemble d'admission d'air selon l'une quelconque des revendications précédentes, dans lequel la première entrée d'air (1) est agencée pour être couverte par une calandre avant du véhicule qui définit une pluralité de chemins d'entrée dans la première entrée d'air (1).

6. Ensemble d'admission d'air selon la revendication 5, dans lequel l'élément directeur d'écoulement d'air (14) comprend une surface externe (14a, 14b, 14c, 14d) permettant de diriger l'écoulement d'air, la surface externe ayant des parties supérieure et inférieure agencées de sorte qu'une distance prévue le long de la partie supérieure soit supérieure à une distance prévue le long de l'écoulement de partie inférieure de façon à augmenter la vitesse d'air s'écoulant sur la partie supérieure par rapport à la vitesse d'air s'écoulant sur la partie inférieure.

7. Ensemble d'admission d'air selon la revendication 6, dans lequel la partie supérieure définit une surface supérieure (14a) de l'élément directeur d'écoulement d'air et la partie inférieure définit une surface inférieure (14b) de l'élément directeur d'écoulement d'air, et la surface supérieure (14a) est en pente vers le bas vers la surface inférieure (14b) depuis une extrémité amont de l'élément directeur d'écoulement d'air jusqu'à une extrémité aval de l'élément directeur d'écoulement d'air (14).

8. Ensemble d'admission d'air selon la revendication 6 ou la revendication 7, dans lequel la surface inférieure (14b) de l'élément directeur d'écoulement d'air est en pente vers le haut vers la surface supérieure (14a) de l'élément directeur d'écoulement d'air depuis une extrémité amont de l'élément directeur d'écoulement d'air (14) jusqu'à une extrémité aval de l'élément directeur d'écoulement d'air.

9. Ensemble d'admission d'air selon la revendication 8, dans lequel la pente de la surface supérieure (14a) a un gradient accru par rapport à la pente de la surface supérieure (14b).

10. Ensemble d'admission d'air selon l'une quelconque des revendications 7 à 9, dans lequel la partie supérieure de l'élément directeur d'écoulement d'air comprend une surface arrière (14c) de l'élément directeur d'écoulement d'air qui est en pente vers le bas entre la surface supérieure (14a) et la surface inférieure (14b).

11. Ensemble d'admission d'air selon l'une quelconque des revendications 6 à 10, dans lequel, en utilisation, l'élément directeur d'écoulement d'air (14) est agencé pour être positionné derrière une surface arrière d'un pare-chocs (15) du véhicule et pour se prolonger en aval du pare-chocs.

12. Ensemble d'admission d'air selon l'une quelconque des revendications 6 à 11, dans lequel l'élément directeur d'écoulement d'air (14) fait partie intégrante du pare-chocs de véhicule (15).

13. Ensemble d'admission d'air selon l'une quelconque des revendications 6 à 12, dans lequel la seconde entrée d'air (2) est définie entre l'élément directeur d'écoulement d'air (14) et une pièce de carrosserie du véhicule.

14. Ensemble d'admission d'air selon la revendication 13, dans lequel la pièce de carrosserie est un becquet avant (17) ayant un profil agencé pour réduire la portance à un dessous du véhicule.

15. Ensemble d'admission d'air selon la revendication 14, dans lequel une surface supérieure (17a, 17b) du becquet (17) comprend une partie qui est inclinée vers le haut depuis une extrémité amont jusqu'à une extrémité aval de celui-ci pour conférer un profil aérodynamique.

16. Ensemble d'admission d'air selon l'une quelconque des revendications 5 à 15, dans lequel la première entrée d'air est agencée pour être définie entre l'élément directeur d'écoulement d'air (14) et un capot du véhicule.

17. Ensemble de refroidissement d'air pour un moteur d'un véhicule automobile, comprenant :
l'ensemble d'admission d'air de l'une quelconque des revendications 1 à 16 agencé pour être positionné en amont du moteur ;
une sortie (3) agencée pour être positionnée en aval du moteur ; et
au moins un conduit (21, 22, 23) définissant un chemin d'écoulement entre les entrées de l'ensemble d'admission d'air et la sortie (3).

18. Véhicule, comprenant :
l'ensemble de refroidissement d'air selon la revendication 17 ; et
un moteur positionné entre l'ensemble d'admission d'air et la sortie (3).
